# EUROPEAN PATENT APPLICATION

(11) **EP 3 339 707 A1**
(43) Date of publication of application: **27.06.2018**
(21) Application number: 17208603.5
(22) Date of filing: 19.12.2017
(51) Int. Cl.: F16L 35/00, F17C 13/04

(54) **A HOSE FOR CONNECTION TO A GAS CYLINDER**

(30) Priority: 22.12.2016 GB 201621978
(71) Applicant: Linde Aktiengesellschaft, 80331 München (DE)
(72) Inventor: Jackson, Christopher Mark, Surrey KT2 6ES (GB); Hilton, Derrick Ernest, Surrey KT11 1BE (GB); Kandziora, Christine, 82056 Baierbrunn (DE)
(74) Representative: Richmond, Sarah

(57) **Abstract**

A hose (5) for gas supply to gas consuming equipment from a cylinder The hose (5) has a first end (6) connectable directly or indirectly to the gas cylinder (1), and an opposite end (8) connectable to a gas inlet of the gas consuming equipment. The hose comprises a screw threaded nut (10) at the first end (6) for making a connection to a complimentary screw thread on the cylinder. A motion sensor (20) is located adjacent to the first end (6) of the hose to detect a movement of the first end and/or the nut. A transmitter (25) receives a signal from the motion sensor (20) and transmits the signal to a remote location.

## Description

The present invention relates to a hose for connection to a gas cylinder.

Gas cylinders are portable freestanding devices which are delivered to various sites for the supply of, for example, industrial and medical gases to locations where no mains gas supply is available. Because of the nature of these cylinders, they are often supplied in advance to the end user who may have little or no experience in fitting the cylinders to the gas consuming equipment.

In some cases, multiple gas hoses are connected to a gas manifold which receives gas supplies from more than one cylinder. If a hose has not been connected to one port of the manifold, this can provide a vent path for cylinders connected to other ports of the manifold. This is at best wasteful and at worst dangerous if there is an uncontrolled leak of gas.

In the case of a single cylinder, the connectors are designed such that they will not dispense gas until the connection is properly made. However, it is still useful to know that the hose is correctly connected to ensure continuity of gas supply to the gas consuming equipment.

According to a first aspect of the present invention, there is provided a hose according to claim 1.

The motion sensor which detects movement of the first end and/or the nut allows the detection of an event associated with connecting and/or disconnecting the hose providing useful information on the state of connection of the hose to the cylinder.

The motion sensor may be an accelerometer. This may be set up to sense, for example, a change of angle of the first end of the hose. Sensing the change of angle is characteristic of disconnection of the hose from the cylinder resulting in an abrupt drop. The subsequent angle of the end indicates that the end has been reconnected. Alternatively or additionally the sensor may be configured to sense vibrations caused by rotation of the nut. This demonstrates that the nut has been unscrewed or screwed.

Alternatively or additionally the sensor may be a detectable tag provided on the nut. The detectable tag may, for example, be a hall sensor to detect a passing magnetic field. Alternatively it may be a light sensor to sense a passing pattern. In either case, the sensor may be on the nut with the component to be sensed being on the hose, or these two components may be arranged the other way around. The motion sensor is configured to detect the passing of the tag as the nut is rotated. This provides direct sensing of the rotation of the nut and therefore determines that the nut has been screwed or unscrewed. The tag may not need to be capable of detecting the direction of rotation. It can be assumed that if one set of signals indicating rotation is relatively quickly followed by a second set of signals, that the first represents unscrewing of the nut and the second represents screwing up of the nut. Alternatively, the tag may be configured to sense the direction of rotation. For example, if the tag is made up of two or more elements generating different electronic signals, the order of receipt of these signals at the sensor provides an indication of the direction of rotation.

The hose may be connected directly to the cylinder. Alternatively, the hose may be connected to the cylinder via a regulator. As a further option, the hose may additionally or alternatively be connected to the cylinder via a manifold to which a number of other hoses are connected. In this instance, preferably, the manifold has a plurality of inlet ports via one of which the hose is connected to the cylinder.

The invention also extends to a system comprising a hose according to the first aspect of the present invention together with a remote unit, the remote unit having a receiver to receive signals from the transmitter, the remote unit being programmed with at least one predetermined signal characteristic of a particular movement of the first end of the hose and/or nut and a controller to compare the received signal against the predetermined signal characteristic to detect a particular movement condition. In this case, preferably, the receiver is configured to receive signals from the transmitters of more than one of the hoses.

An example of the present invention will now be described with reference to the accompanying drawings in whichFig. 1 is a schematic cross-section through the hose connected to a cylinder and remote unit;
Fig. 2 is a schematic view of a first sensor configuration;
Figs. 3A to 3C are schematic views of a second sensor configuration;
Fig. 4 is a schematic cross-section through a first end of the hose connected to the nut 10 showing a further sensor configuration;
Figs. 4A and 4B are schematic views of the first end of the hose shown in Fig. 4 in different orientations; and
Fig. 5 is a schematic view of the remote unit.

The cylinder 1 is a standard gas cylinder provided with a gas outlet 2 with a screw threaded connection 3. The invention is specifically designed to connect to standard cylinders without modification so that no further description of the cylinder will be provided here. It should be noted, however, that the invention could also be applied to a cylinder with a female screw thread.

The hose 5 is again a standard component with a flexible connection between the cylinder 1 and a first end 6 and gas consuming equipment 7 at a second end 8.

The connector at the first end 6 is made up of two main components, namely an insert 9 and a screw threaded nut 10. The insert 9 is inserted into the first end 6 of the hose 5 and has a number of ridges 11 to enhance the interference fit with the hose. A crimp connection ensures a gas tight seal between the hose 5 and insert 9. The end of the insert 9 which protrudes from the tube 5 has a flange 13 which is sealed to the end of the outlet 2 by metal to metal seal. The connection is secured by the nut 10 which has a screw thread 15 which mates with the screw thread 3 on the outlet 2. The opposite end of the nut 10 bears against the flange 13 to tighten the flange onto the outlet 2.

As described so far, this is a conventional way of attaching a hose to a cylinder.

The improvement provided by the present invention is the provision of the sensor 20. The sensor may be attached to any part of the connection in the vicinity of the first end 6. As shown here, it is attached to the hose 5 but could also be attached to the insert 9 or the nut 10.

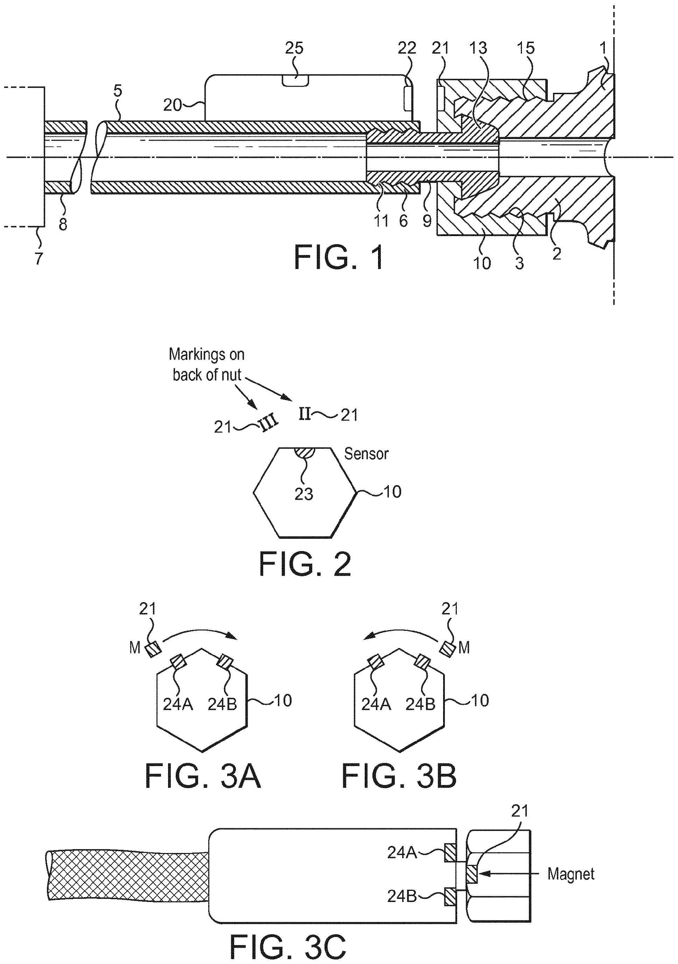

As shown in Fig. 1, the nut 10 is provided with an electronically detectable tag 21 such as a magnet, RFID tag, distinctive marking or the like and the sensor 20 is configured to detect the passing of the tag 21 as the nut 10 is rotated. For example, Fig. 2 depicts the tag 21 as a distinctive marking on the back of the nut which is detected by an optical sensor 23 on the nut 10 (shown schematically in Fig. 2) as the nut 10 rotates past the markings. As shown in Fig. 2, there are two distinctive markings spaced in close proximity around the nut so that rotation in one directed can be distinguished from rotation in the opposite direction depending on the order of sensing of the two tags 21.

An alternative is shown in Fig. 3A to 3C. In this case, the tag 21 is a magnet and there are a pair of hall sensors 24 providing the sensor 20. As the nut 10 is rotated in the clockwise direction shown in Fig. 3A, the sensor 24B will pass the magnet 21 shortly before the sensor 24A. Rotation in the opposite direction shown in Fig. 3B will cause the opposite effect in that the sensor 24A will pass the magnet 21 shortly before the sensor 24B allowing a controller to determine the direction of rotation.

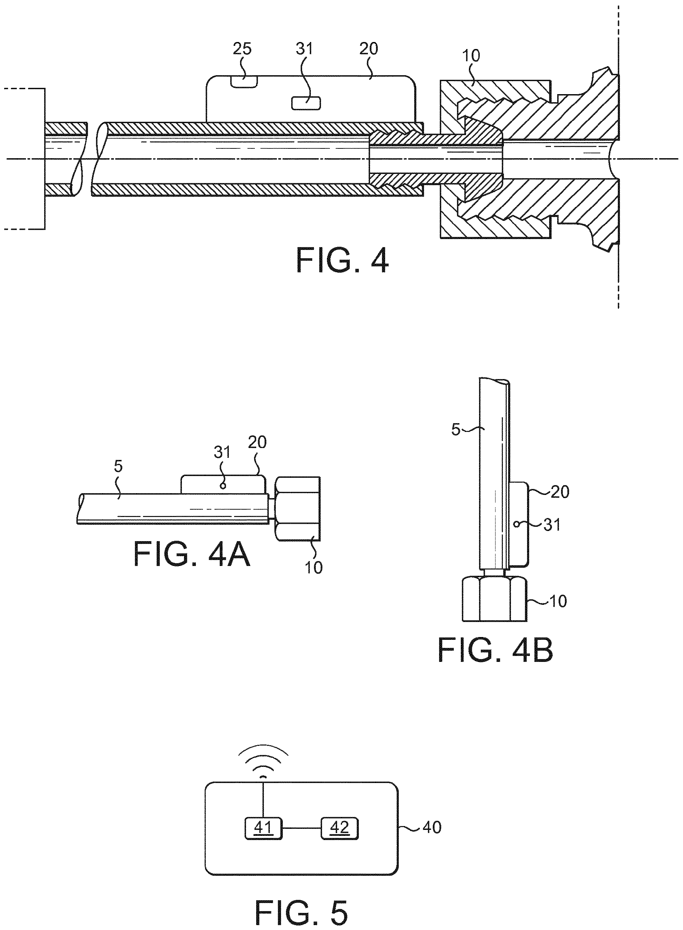

A further alternative is shown in Fig. 4. In this case, the sensor 20 is provided by an accelerometer 31. In the normally connected configuration depicted in Fig. 4A, the accelerometer 31 is in a horizontal configuration. When the nut 10 is disconnected, because the hose 5 is unsupported, it will move to a generally vertical configuration as shown in Fig. 4B and the accelerometer is able to detect the movement to the new orientation.

As a further alternative, the accelerometer 31 shown in Fig. 4 may be replaced by a vibration sensor. In this case, as the nut 10 is vibrated, the effect of this is transmitted to the hose 5 and this is detected by the sensor. Alternatively the vibration sensor may be directly on the nut 10 so as to sense the motion of the nut 10 directly.

The information detected by the sensor 20 is transmitted via a transmitter 25 using any known form of data transmission to a remote unit 40 comprising a receiver 41 and a controller 42. The remote unit 40 may be a bespoke unit, or may be a smart phone, tablet or remote computer terminal. The receiver 41 receives the signal from the sensor 20 and the controller 42 compares the received signal with a database containing information regarding characteristic signals indicative of various conditions concerning the attachment and reattachment of the nut 10 as set out above. The controller 42 can therefore determine whether the nut 10 has been detached and/or reattached. This information can simply be logged for later diagnostic access. Alternatively or additionally it can be used to sound an alarm to a user or activate some form of safety procedure which will not allow a user to use the gas supply until the correct attachment of the nut 10 can be verified.

## Claims

1. A hose for gas supply to gas consuming equipment from a gas cylinder, the hose having a first end connectable directly or indirectly to the gas cylinder and an opposite second end connectable to a gas inlet for supplying gas to the gas consuming equipment, the hose comprising a screw threaded nut of the first end for making a screw threaded connection to a complimentary screw thread on the cylinder;
a motion sensor adjacent to the first end to detect a movement of the first end and/or the nut;
a transmitter to receive a signal from the motion sensor and transmit the signal to a remote location.

2. A hose according to claim 1, wherein the sensor is an accelerometer.

3. A hose according to claim 2, wherein the accelerometer is configured to detect a change of angle of the first end of the hose.

4. A hose according to claim 2 or claim 3, wherein the accelerometer is configured to sense vibrations caused by rotation of the nut.

5. A hose according to any one of the preceding claims wherein a detectable tag is provided on the nut, and wherein the motion sensor is configured to detect the passing of the tag as the nut is rotated.

6. A hose according to claim 5, wherein the tag is a magnet.

7. A hose according to any one of the preceding claims in combination with a manifold having a plurality of inlet ports via one of which the hose is connected to the cylinder.

8. A system comprising a hose according to any one of the preceding claims and a remote unit, the remote unit having a receiver to receive signals from the transmitter, the remote unit being programmed with at least one predetermined signal characteristic of a particular movement of the first end of the hose and/or nut and a controller to compare the received signal against the predetermined signal characteristic to detect a particular movement condition.

9. A system according to claim 8 comprising a plurality of hoses according to any one of the preceding claims, the receiver being configured to receive signals from the transmitters of more than one of the hoses.
